# EUROPÄISCHE PATENTANMELDUNG

(11) **EP 0 926 757 A2**
(43) Veröffentlichungstag der Anmeldung: **30.06.1999**
(21) Anmeldenummer: 98121882.9
(22) Anmeldetag: 18.11.1998
(51) Int. Cl.: H01M 10/10

(54) **Verfahren zur Herstellung eines Betriebselektrolyten für Bleiakkumulatoren in Form eines thixotrophen Gels**

(30) Priorität: 23.12.1997 DE 19757481
(71) Anmelder: Accumulatorenwerke Hoppecke Carl Zoellner & Sohn GmbH & Co. KG, 59929 Brilon (DE)
(72) Erfinder: Nann, Eberhard, Dr., 59494 Soest-Deiringsen (DE); Ruch, Jean, Dr., 59929 Brilon (DE)
(74) Vertreter: Stenger, Watzke & Ring Patentanwälte

(57) **Zusammenfassung**

Der vorliegenden Erfindung liegt die Aufgabe zugrunde, ein Verfahren zur Herstellung eines in Form eines thixotropen Gels in den Zellen von Bleiakkumulatoren festlegbare Betriebselektrolyten anzugeben, mit welchem auch große Mengen der zur Einfüllung in die Bleiakkumulatoren benötigten Flüssigkeiten zur Verbesserung der industriellen Einsetzbarkeit vorbereitend angemischt werden können. Zur technischen Lösung dieser Aufgabe wird mit der Erfindung vorgeschlagen, daß in den aktiven Massen von positiven und negativen Platten in den Akkumulatorenzellen die zur Einstellung der Endsäuredichte des Betriebselektrolytens des gebrauchsfertigen Akkumulators erforderliche Menge an Schwefelsäure in Form von Bleisulfat gespeichert wird, während unabhängig davon Wasser durch Zugabe einer Säure auf einen PH-Wert von 2 bis 4,7 eingestellt und anschließend mit einem Gelbildner vermischt wird.

## Beschreibung

Die Erfindung betrifft ein Verfahren zur Herstellung eines in Form eines thixotropen Gels in den Zellen von Bleiakkumulatoren festlegbaren Betriebselektrolyten.

Bleiakkumulatoren mit Betriebselektrolyten in Form eines thixotropen Gels sind an sich bekannt und haben den Vorteil der Auslaufsicherheit und der Wartungsfreiheit. Bei der Herstellung ist die Frage der Einbringung des Gels in den Akkumulator nach wie vor problematisch.

Gemäß DE-A-459909 werden die Hauptbestandteile des Betriebselektrolytens getrennt voneinander in die Zellen eingebracht. Zunächst wird die Schwefelsäure in Form von Bleisulfat in den aktiven Massen der Elektrodenplatten gespeichert und die Zellen ggf. mit einer Trockenfüllung versehen. Erst beim Endverbraucher wird in die Zellen destilliertes Wasser eingefüllt und der Akkumulator geladen, so daß die mit der Ladung wieder frei werdende Schwefelsäure mit dem Wasser den Betriebselektrolyten bildet.

Gemäß DE-A-3041953 wird nur ein Teil der für die Endsäuredichte erforderlichen Säure in die aktiven Massen der Elektrodenplatten eingebracht. Bei Inbetriebnahme wird ein Schwefelsäure-Gelbildner-Gemisch eingesetzt und eingefüllt.

Gemäß EP-A-0272474 wird ebenfalls zunächst die gesamte Schwefelsäure, die zur Einstellung der Endsäuredichte des Betriebselektrolyten der gebrauchsfertigen Batterie erforderlich ist, als Bleisulfat in den aktiven Massen der positiven und negativen Platten gespeichert. In einem zweiten Verfahrensschritt wird ein Wasser-Gelbildner-Gemisch mit einem Wasserstoffionenbildner in vorgegebenen Mengen, entweder bestehend aus Phosphorsäure oder aus Natriumhydrogensulfat, sowie einem Gelbildner in Form von pyrogenem Siliciumdioxid angemischt und in die Akkumulatorenzellen eingefüllt, wobei zunächst dem Wasser grundsätzlich der Wasserstoffionenbildner oder Teilmengen davon vor dem Gelbildner zugemischt werden.

Alle beschriebenen bisher bekannten Verfahren haben den Nachteil, daß nur kleine Mengen angemischt werden können, wie sie gerade für den Fertigstellungs- bzw. Inbetriebnahmeprozeß von Bleiakkumulatoren benötigt werden. Werden zu große Mengen vorbereitend hergestellt, besteht die Gefahr, daß der Gelbildner unwirksam ist, so daß aktuell nicht verwertbare Restmengen für den industriellen Einsatz nicht mehr geeignet sind.

Ausgehend von diesem Stand der Technik liegt der vorliegenden Erfindung die **Aufgabe** zugrunde, ein Verfahren zur Herstellung eines in Form eines thixotropen Gels in den Zellen von Bleiakkumulatoren festlegbare Betriebselektrolyten anzugeben, mit welchem auch große Mengen der zur Einfüllung in die Bleiakkumulatoren benötigten Flüssigkeiten zur Verbesserung der industriellen Einsetzbarkeit und Herstellungsverfahren vorbereitend angemischt werden können.

Zur technischen **Lösung** dieser Aufgabe wird mit der Erfindung vorgeschlagen, daß in den aktiven Massen von positiven und negativen Platten in den Akkumulatorenzellen die zur Einstellung der Endsäuredichte des Betriebselektrolytens des gebrauchsfertigen Akkumulators erforderliche Menge an Schwefelsäure in Form von Bleisulfat gespeichert wird, während unabhängig davon Wasser durch Zugabe einer Säure auf einen PH-Wert von 2 bis 4, 7 eingestellt und anschließend mit einem Gelbildner vermischt wird.

Überraschend hat sich gezeigt, daß der angegebene PH-Bereich für den Gelbildner eine Verzögerung darstellt, so daß die hergestellte Wasser/Säure/Gelbildner-Mischung auch in großen Mengen angemischt und über einen längeren Zeitraum verwertet werden kann.

Üblicherweise kann die Schwefelsäure in den Platten in Form von Bleisulfat sowohl elektro-chemisch als auch chemisch gespeichert werden.

Bei dem chemischen Verfahren wird Schwefelsäure in die mit noch unformierten positiven und negativen Platten bestückten Akkumulatorenzellen eingefüllt. Nach einer entsprechenden Zeit hat sich in den aktiven Massen Bleisulfat in der für die Endsäuredichte des Betriebselektrolyten für den gebrauchsfertigen Akkumulator erforderlichen Menge gebildet. Die verbleibende Schwefelsäure wird aus den Zellengefäßen wieder entfernt.

Bei einem elektro-chemischen Verfahren werden die mit positiven und negativen Platten bestückten Akkumulatorenzellen zunächst formiert, das heißt, durch einfüllen vorzugsweise von Schwefelsäure wird der Akkumulator geladen. Nach Ende des Ladeprogramms wird durch Säuretausch oder Zusatz weiterer Schwefelsäure die Säuredichte des Elektrolyten so eingestellt, daß die in den aktiven Massen in Bleisulfat während der anschließenden Entladung gespeicherte Säure und die verbleibende Restsäuredichte in den Platten und Separatoren so bemessen sind, daß daraus die Endsäuredichte des Betriebselektrolyten für den gebrauchsfertigen Akkumulator gebildet wird. Nach dem Entladen der Batterie wird der Elektrolyt entfernt und durch das Wasser-Gelbildner-Gemisch ersetzt.

Gemäß einem besonders vorteilhaften Vorschlag der Erfindung wird während des Bildungsprozesses von Bleisulfat die Schwefelsäure in den Zellen umgewälzt. Diese Maßnahme führt zu einer Vergleichsmäßigung der Säuredichte in den positiven und negativen Platten und in der Zelle.

Gemäß einem weiteren vorteilhaften Vorschlag der Erfindung erfolgt die Umwälzung auch bei Einfüllung des Wasser-Gelbildner-Gemisches in die Akkumulatorenzellen, was ebenfalls Vergleichsmäßigungen bewirkt. Gemäß einem weiteren vorteilhaften Vorschlag der Erfindung wird das Wasser-Gelbildner-Gemisch nach dem Einfüllen in die Akkumulatorenzellen und gegebenenfalls während eines Ladevorgangs bis zum Einsetzen eines Gelierprozesses umgewälzt.

In vorteilhafter Weise erfolgen die Umwälzungen durch das Einblasen von Luft.

Mit der Erfindung wird weiterhin in besonders vorteilhafter Weise vorgeschlagen, daß zur Einstellung des PH-Wertes Borsäure verwendet wird. Die Borsäure kann anstelle von Phosphorsäure oder Natriumhydrogensulfat zur Einstellung des PH-Wertes mit dem Wasser vermischt werden und hat in bezug auf den Gelbildner weitere positive verzögernde Wirkung.

In vorteilhafter Weise kann zusammen mit der Einfüllung des Wasser-Gelbildner-Gemisches zusätzlich Phosphorsäure in die Zellen eingefüllt werden, was die Zyklenfestigkeit positiv beeinflußt.

Mit der Erfindung wird ein einfach realisierbares Verfahren vorgeschlagen, welches die industrielle Herstellung von Bleiakkumulatoren mit Betriebselektrolyten in Form von thixotropem Gel erheblich fördert. Wesentlich ist dabei die Einstellung der PH-Wertes des Wassers in den Bereich von 2 bis 4,7 vor Zumischung des Gelbildners. Darüber hinaus ist die Verwendung von Borsäure besonders günstig. Mit besonderem Vorteil wird vorgeschlagen, daß das Wasser auf eine PH-Wert von 4,1 bis 4,7 eingestellt wird, was ein besonders vorteilhafter PH-Wert unter dem Gesichtspunkt der Vorbereitung großer Gemischmengen ist. Vor der Zugabe von Borsäure kann dem Wasser Natriumsulfat beigegeben werden um die Ionenbildung zu unterstützen und beim Ladeprozeß zu Beginn genügend Leitfähigkeit des Elektrolyten zu gewährleisten.

Der beschriebene Prozeß eignet sich auch bei Verwendung spezieller Akkumulatorengehäuse, bei welchen die positiven und negativen Platten nicht direkt auf dem Zellenboden stehen, sondern darunter ein sogenannter Schlammraum gebildet ist, da durch das Stellen der Säuredichte vor dem Entladen die verbleibende Säuredichte nach dem Ausbilden des Bleisulfats durch Entladen in dem Schlammraum mit für die Betriebssäuredichte berücksichtigt werden kann bzw. werden muß.

Ein Fertigungsablauf kann beispielsweise so aussehen, daß nach dem Bestücken der Akkumulatorenzellen, das heißt nach der Beendigung der mechanischen Fertigung des Akkumulators, dies zunächst vorbereitet wird. Zu diesem Zwecke wird er vorzugsweise in einem Vakuumfüllverfahren mit Schwefelsäure gefüllt und die positiven und negativen Platten werden formiert, das heißt geladen. Dieser Vorgang dauert ca. 72 Stunden. Anschließend wird durch Säuretausch eine entsprechend hoch konzentrierte Schwefelsäure eingefüllt und durch Entladung, etwa 35 Stunden, das gewünschte Sulfat (PbSO₄) in den Platten ausgebildet, wobei die so bemessen ist, daß das ausgebildete Sulfat der Menge entspricht, die zur Einstellung der gewünschten Endsäuredichte des Betriebselektrolyten erforderlich ist.

Der Akkumulator ist somit nach dem Entleeren vorbereitet.

Parallel wird die Dispersion angemischt, wobei etwa ein Liter pro 100 Ah Nennkapazität benötigt werden. Mischt man nun die Dispersion an, so kann dem Wasser zunächst eine erforderliche Menge Natriumsulfat (Na₂SO₄) beigegeben werden. Nach dessen Auflösung wird dem Wasser zur Einstellung des PH-Wertes Borsäure (H₃BO₃) beigemischt. Der Sollwert des PH-Wertes soll zwischen 2 und 4,7, vorzugsweise zwischen 4,1 und 4,7 liegen.

Anschließend wird dem Wasser noch die thixotropische Kieselsäure (SiO₂) beigemischt, eine Ausführungsvariante für einen Gelbildner.

Nach dem fertigen Anmischen kann durch Temperaturmessung die Wirksamkeit der Dispersion geprüft werden. Die Temperatur sollte um etwa 5°C gestiegen sein.

Die fertige Dispersion kann beispielsweise unter paralleler Beigabe von Phosphorsäure (H₃PO₄) in den Akkumulator eingefüllt werden, wobei ein Umwälzen durch Einströmen von Druckluft aufrechterhalten wird. Dieses Umwälzen wird bis zum Einsetzen des Gelierprozesses weitergeführt.

Der Akkumulator wird nach dem Einfüllen und während des aufrechterhaltenden Umwälzens geladen und steht anschließend fertig zur Verfügung.

## Patentansprüche

1. Verfahren zur Herstellung eines in Form eines thixotropen Gels in den Zellen von Bleiakkumulatoren festlegbaren Betriebselektrolyten, wobei in aktiven Massen von positiven und negativen Platten in den Akkumulatorenzellen die zur Einstellung der Endsäuredichte des Betriebselektrolyten des gebrauchsfertigen Akkumulators erforderliche Schwefelsäure in Form von Bleisulfat gespeichert wird, und wobei zum Einfüllen in die Zellen vorgesehenes Wasser durch Zugabe einer Säure auf einen PH-Wert von 2 bis 4,7 eingestellt und anschließend mit einem Gelbildner vermischt wird.

2. Verfahren nach Anspruch 1, dadurch gekennzeichnet, daß das Wasser auf einen PH-Wert von 4,1 bis 4,7 eingestellt wird.

3. Verfahren nach einem der vorhergehenden Ansprüche, dadurch gekennzeichnet, daß dem Wasser Borsäure zugegeben wird.

4. Verfahren nach einem der vorhergehenden Ansprüche, dadurch gekennzeichnet, daß dem Wasser vor der Zugabe von Borsäure Natriumsulfat beigegeben wird.

5. Verfahren nach einem der vorhergehenden Ansprüche, dadurch gekennzeichnet, daß während des Speichervorgangs der Schwefelsäure in den positiven und negativen Platten die Schwefelsäure umgewälzt wird.

6. Verfahren nach einem der vorhergehenden Ansprüche, dadurch gekennzeichnet, daß das Wasser-Gelbildner-Gemisch während des Einfüllens in die Akkumulatorenzellen umgewälzt wird.

7. Verfahren nach einem der vorhergehenden Ansprüche, dadurch gekennzeichnet, daß das Wasser-Gelbildner-Gemisch nach dem Einfüllen in die Akkumulatorenzellen während eines Ladevorgangs bis zum Einsetzen eines Gelierprozesses umgewälzt wird.

8. Verfahren nach einem der Ansprüche 5 bis 7, dadurch gekennzeichnet, daß die Umwälzung durch Einblasen von Luft durchgeführt wird.

9. Verfahren nach einem der vorhergehenden Ansprüche, dadurch gekennzeichnet, daß bei der Einfüllung des Wasser-Gelbildner-Gemisches Phosphorsäure zugeführt wird.
